# EUROPÄISCHE PATENTSCHRIFT

(11) **EP 0 922 424 B1**
(45) Veröffentlichungstag und Bekanntmachung des Hinweises auf die Patenterteilung: **20.09.2000**
(21) Anmeldenummer: 98122746.5
(22) Anmeldetag: 30.11.1998
(51) Int. Cl.: A47J 27/62

(54) **Kochsystem**
Cooking system
Système de cuisson

(30) Priorität: 10.12.1997 DE 19754851
(43) Veröffentlichungstag der Anmeldung: 16.06.1999
(73) Patentinhaber: Herchenbach, Wolfgang, Dr., D-86938 Schondorf/Ammersee (DE)
(72) Erfinder: Herchenbach, Wolfgang, Dr., D-86938 Schondorf/Ammersee (DE)

(56) Entgegenhaltungen:
- EP-A- 0 621 739
- PATENT ABSTRACTS OF JAPAN vol. 98, no. 11, 30. September 1998 & JP 10 155653 A (MATSUMOTO TAKEO), 16. Juni 1998

## Beschreibung

Die Erfindung betrifft ein Kochsystem, bestehend aus einem Kochfeld, einem durch die Kochfläche hindurch fremdbeheizten temperaturgeregelten Kochgeschirr und einem seitlich am Kochgechirr befindlichen Permanentmagneten, der auf einen unter der Kochfläche angeordneten, magnetisch betätigbaren Sensor (z.B. Reedkontakt) einwirkt. Dieser Stand der Technik ist in der Europäischen Patentanmeldung EP-A-0 621 739 im Detail beschrieben. Dort wird die Regelung der Temperatur des Kochgeschirrs durch einen Steckthermostaten bewirkt, dessen hydraulischer Temperaturfühler in eine horizontale Bohrung im Kochgeschirrboden eingesteckt ist, und dessen Permanentmagnet durch das hydraulische System temperaturabhängig bewegt wird.

Aufgabe der Erfindung ist es, die Konstruktion des Thermostaten weiterzuentwickeln, zu vereinfachen und insbesondere den Permanentmagneten und den Reedkontakt so nahe an den Mantel des Kochgeschirrs heranzubringen, dass der Thermostat in dem Bereich zwischen dem senkrechten Mantel eines Übertopfs und dem unten nach innen gekrümmten Mantel des Kochgeschirrs Platz findet, sodass nichts mehr oder nur der Einstellknopf aus dem Übertopf herausragt.

Diese Aufgabe wird dadurch gelöst, dass der Permanentmagnet von einem Thermobimetall bewegt wird, das im Wärmekontakt zum Kochgeschirrboden steht, und vorzugsweise nach Art einer Schnappscheibe mit einer kalottenförmigen Ausprägung versehen ist, sodass der Permanentmagnet im Schaltpunkt springt.

Da mit einem beweglichen Permanentmagneten gearbeitet wird ist es zweckmässig, ihn in dem Höhenbereich, in dem der Reedkontakt schaltet, springen zu lassen, um ein sauberes Schalten und eine definierte Schalttemperatur zu gewährleisten.

Diese Sprungfunktion kann, wie schon erwähnt, in das Bimetall integriert werden, indem dieses nach Art einer Schnappscheibe ausgebildet wird, die bei einer bestimmten Temperatur von der koncaven in die konvexe Form umspringt. Es kann sich dabei um eine handelsübliche Schnappscheibe handeln, die mit dem Kochgeschirrboden im Wärmekontakt steht und auf einen den Permanentmagneten tragenden Hebel einwirkt. Die Schnappfunktion kann aber auch durch entsprechende Verformung in einen länglichen Bimetallstreifen an dessen einem Ende integriert sein, während sich an seinem anderen Ende der Permanentmagnet befindet. Die Schnapptemperatur ist durch den Verformungsgrad des Bimetalls definiert, das in entsprechend kalibrierter Form vom Bimetallhersteller bezogen werden kann. Sie kann in gewissen Grenzen durch Belastung des Bimetalls verändert, d.h. eingestellt werden.

Das Schnappen des Permanentmagneten wird auch, ggf. zusätzlich, durch ferromagnetische Teile bewirkt, die in der Nähe des sich bewegenden Permanentmagneten fest angebracht sind. Das können beispielsweise zwei rechts und links vom Permanentmagneten im Abstand von einigen Millimetern angebrachte horizontale ferromagnetische Drahtstummel sein, die zur Feinjustage leicht verbogen werden können. Der Permanentmagnet zieht diese Drahtstummel entweder mit seiner Oberseite oder mit seiner Unterseite an, sodass sich eine labile Mittelage ergibt, die der Permanentmagnet überspringt, gleichgültig, ob er von unten (beim Aufheizen) oder von oben (beim Abkühlen) kommt. Eine gleichartige Wirkung übt auch die Kante des ferromagnetischen Kochgeschirrbodens aus, wenn der Permanentmagnet genügend nahe an ihr vorbeigeführt wird.

Wenn das Kochgeschirr direkt auf der Kochfläche aufsteht, also kein Übertopf vorhanden ist, wie dies z.B. bei elektrischen Strahlungskochfeldern der Fall ist, bieten diese raumsparenden Anordnungen den gleichen Vorteil, dass nämlich nichts seitlich hervorsteht, Töpfe also wie bisher ineinander gesetzt werden können. In diesem Fall kann das Bimetall mit einem Ende seitlich am Kochgeschirrboden angeschraubt, angenietet oder angeschweisst sein, horizontal gekrümmt konzentrisch zur Aussenkontur des Kochgeschirrbodens verlaufen und über sein anderes Ende die Bewegung des Permanentmagneten bewirken.

Wird das Kochgeschirr durch Induktion beheizt und trägt einen Übertopf, der für das Induktionsfeld durchlässig und wärmeisolierend ist (vgl. vorerwähnte EPA), so ist es besonders vorteilhaft, zwischen Kochgeschirrboden und Übertopfboden einen Spalt zu belassen, in dem das im Wärmekontakt zum Kochgeschirrboden stehende Bimetall sowie ein Teil der Reglermechanik angeordnet ist. Dieser Spalt wirkt gleichzeitig als zusätzliche Wärmeisolation, was besondere Bedeutung bei der Verwendung temperaturempfindlicher Kochflächen hat.

Das Bimetall muss in diesem Fall, in dem es im unmittelbaren Bereich des Induktionsfeldes liegt, aus nicht ferromagnetischem Material bestehen, weil es sonst selbst vom Induktionsfeld erhitzt würde und somit nicht mehr die Temperatur des Kochgeschirrbodens messen könnte.

Das Bimetall ist zweckmässigerweise radial angeordnet und steht mit seinem zur Bodenmitte gerichteten Ende mit dem Kochgeschirrboden in direktem Wärmekontakt. Mit seinem ändern Ende wirkt es auf das kurze Ende eines Gelenkhebels mit hoher Übersetzung ein, dessen Gelenk zur stufenlosen Einstellung der Temperatur höhenverstellbar ist, und an dessen langem Ende der Permanentmagnet befestigt ist.

Um die Funktion dieses zwischen Kochgeschirrboden und Übertopfboden angeordneten Thermostaten zu gewährleisten braucht der Luftspalt nicht grösser als 3 mm zu sein. Allerdings kann es zweckmässig sein, zur Vergrösserung des Hubweges des direkt neben dem Kochgeschirrboden liegenden Permanentmagneten in den Kochgeschirrboden, der als Sandwichboden mindestens 4 mm stark ist, von unten einen radialen Schlitz zu fräsen, in den der an seinem äusseren Ende den Permanentmagneten tragende Gelenkhebel auf seinem Weg nach oben hineintauchen und in den ggf. auch das Bimetall hineingelegt werden kann. Die Aufheizung des Kochgeschirrbodens durch das Induktionsfeld wird dadurch nicht beeinträchtigt.

Noch einfacher ist eine Anordnung, bei der das Bimetall relativ lang (z.B. 50-100 mm) und dünn (z.B. 0,1-0,15 mm) ist, sodass es schon bei geringen Temperaturänderungen relativ grosse Ausschläge zeigt. Bei Verwendung eines so dimensionierten Bimetalls, das an einem Ende mit dem Kochgeschirrboden im Wärmekontakt steht, ist keine Übersetzung mehr erforderlich. Es kann an seinem anderen Ende unmittelbar den Permanentmagneten tragen.

In dem Spalt zwischen Kochgeschirrboden und Übertopfboden kann auch eine gut wärmeleitende, z.B. aus Kupfer bestehende Wärmeleitplatte angebracht (geschraubt, genietet, geschweisst, gelötet) werden, die seitlich über den Kochgeschirrboden hinausragt, im Wärmekontakt zum Thermobimetall steht und die Reglermechanik sowie den Permanentmagneten trägt. Dabei liegt das vorzugsweise als Schnappscheibe ausgebildete Bimetall neben dem Kochgeschirrboden auf der Wärmeleitplatte. Dies hat den Vorteil, dass auch die handelsüblichen ferromagnetischen Bimetallqualitäten verwendet werden können, da dieser Platz ausserhalb des Induktionsfeldes liegt, sodass eine Eigenerwärmung des Bimetalls durch das Induktionsfeld keine Rolle mehr spielt.

Am zweckmässigsten verzichtet man bei einer solchen, radikal vereinfachten, kostengünstigen Thermostat-Einheit ganz auf eine stufenlose Temperatureinstellvorrichtung, wählt eine feste Voreinstellung für eine bestimmte Temperatur, wie sie bei einer Bimetall-Schnappscheibe ohnehin gegeben ist, und verwendet sie als Festthermostat. So können mehrere Festthermostate für verschiedene Temperaturstufen (z.B. Wärmen, Garen, Köcheln, Kochen, Braten, Rösten) nebeneinander um den Kochgeschirrboden herum angeordnet werden.

Die gewünschte Temperaturstufe kann dann durch einfaches Drehen des Kochgeschirrs auf dem Kochfeld eingestellt werden, indem so der Permanentmagnet des Festthermostaten für die gewünschte Temperaturstufe über die Position des Reed-kontaktes gebracht wird, die selbstverständlich auf dem Kochfeld gekennzeichnet ist. Zu diesem Zweck sind aussen am Übertopf Kennzeichen für die Positionen der verschiedenen Festthermostate angebracht.

Die Idee, anstelle eines Einstellthermostaten, der aussen am Übertopf einen Einstellknopf erfordert, und dessen Welle abgedichtet durch den Übertopfmantel geführt werden muss, mehrere Festthermostate einzusetzen und die Temperatureinstellung durch Drehen des Kochgeschirrs vorzunehmen, kann auch bei der vorerwähnten Konstruktion des Thermostaten mit Gelenkhebel verwendetwerden. In diesem Falle wird die Höhenposition der Gelenkwelle entsprechend der gewünschten Temperatur fest voreingestellt, und der aus dem Übertopf herausragende Einstellknopf entfällt.

Wenn die Thermostate wie beschrieben nahe neben dem Kochgeschirrboden liegen, muss auch der Reedkontakt entsprechend nahe an die Induktionsspule herangerückt werden. Um dabei störende Einflüsse des Induktionsfeldes auf den Reedkontakt auszuschliessen, wird dieser in einem senkrecht unter der Kochfläche angeordneten, nach oben offenen Rohr aus ferromagnetischem Material untergebracht.

Das Eigengewicht des Permanentmagneten belastet das Bimetall und verändert dadurch z.B. die Schnapptemperatur einer Bimetall-Schnappscheibe. Daher ist es zweckmässig, das Gewicht des Permanentmagneten durch ein Gegengewicht oder eine Feder möglichst weitgehend auszugleichen.

Zur Wärmeisolation können zwischen Kochgeschirr und Übertopf wärmeisolierende, hochtemperaturfeste Einlagen vorgesehen werden. Diese bewirken, dass der z.B. aus Melamin bestehende Übertopf selbst beim Braten keinen unzulässigen Temperaturen ausgesetzt ist. Ausserdem wirken sie energiesparend.

Um das Kochgerät geschirrspülmaschinenfest zu machen ist im Bereich des oberen Randes zwischen Kochgeschirr und Übertopf eine ringförmige elastische Dichtung angeordnet. Weil damit das Luftvolumen zwischen Kochgeschirr und Übertopf abgeschlossen ist käme es beim Erhitzen zu Überdruck, der durch ein einseitig wirkendes Überdruckventil ausgeglichen werden muss. Dadurch entsteht beim Abkühlen ein Unterdruck, der unschädlich ist und nicht ausgeglichen werden muss.

Eine optimale Wärmeisolation und Energieersparnis erreicht man durch Evakuieren des Raumes zwischen Kochgeschirr und Übertopf. Dabei muss zur Vermeidung von Überbeanspruchung der Übertopfboden durch Distanzhalter, die angeformt oder eingelegt sein können, gegen den Kochgeschirrboden abgestützt sein. Befestigungsmittel zwischen Kochgeschirr und Übertopf sind dabei nicht erforderlich, weil das Vakuum beide fest zusammenhält.

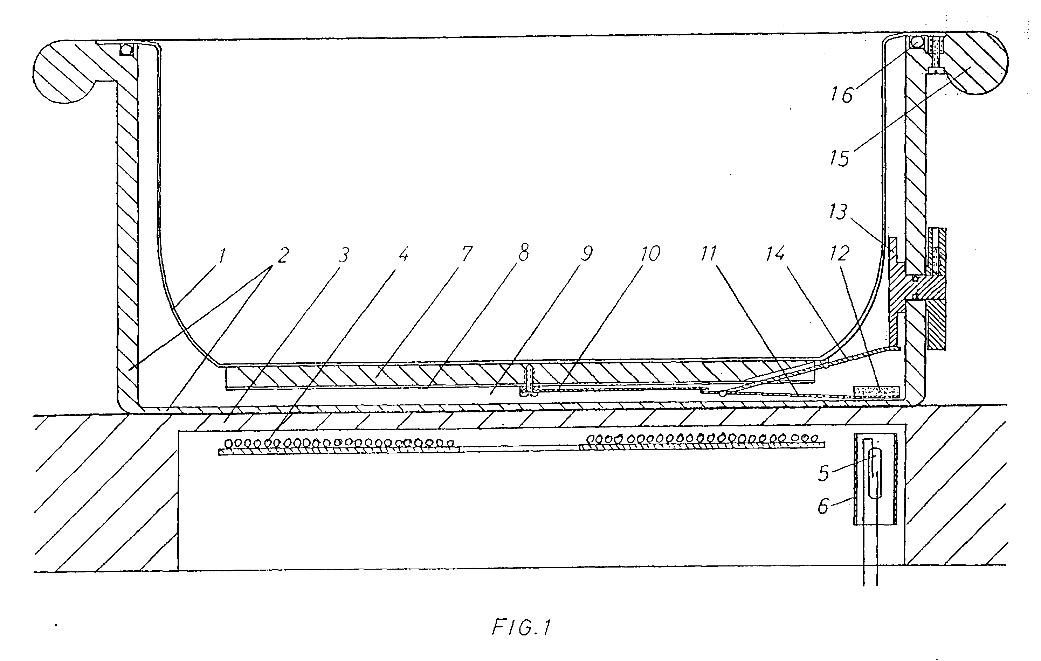

Fig. 1 zeigt schematisch ein Ausführungsbeispiel des Erfidungsgegenstandes. Das Kochgeschirr 1 mit dem Übertopf 2 steht auf der Kochfläche 3, die Teil einer durchgehenden Küchenarbeitsplatte ist. Unter der Kochfläche 3 befindet sich die Induktionsspule 4, von deren offenem Zentrum her Luft zur Kühlung der Kochfläche 3 abgesaugt wird. Der die Induktionsleistung schaltende Reedkontakt 5 befindet sich innerhalb des der Abschirmung dienenden, nach oben offenen Rohres 6 aus ferromagnetischem Material. Das Kochgeschirr 1 weist einen Sandwichboden auf, der aus der Wärmeverteilungsschicht 7 (z.B. aus Aluminium oder Kupfer) und der Heizschicht 8 besteht, die zur Aufnahme des Induktionsfeldes ferromagnetisch sein muss.

Zwischen dem Kochgeschirrboden 8 und dem Boden des Übertopfes 2 befindet sich ein Spalt 9. Innerhalb dieses Spaltes 9 ist das Bimetall 10 an einem Ende gut wärmeleitend an den Sandwichboden 7,8 geschraubt. Es muss, um Eigenaufheizung im Induktionsfeld zu vermeiden, unbedingt aus nicht ferromagnetischem Material bestehen. Bei Erwärmung der Heizschicht 8 krümmt es sich nach unten und wirkt dabei auf den kurzen Arm des Gelenkhebels 11, sodass der am langen Arm befestigte Permanentmagnet 12 angehoben wird, bis der Reedkontakt 5 öffnet und die Induktionsleistung abschaltet. Die Solltemperatur wird durch die Exzenterscheibe 13 eingestellt, die auf den Einstellhebel 14 einwirkt, der die Höhenlage der Welle des Gelenkhebels 11 bestimmt.

Der Übertopf 2 ist oben mit dem Kochgeschirr 1 verschraubt, mit einer umlaufenden Griffwulst 15 versehen und weist eine umlaufende Rille zur Aufnahme der elastischen Ringdichtung 16 auf.

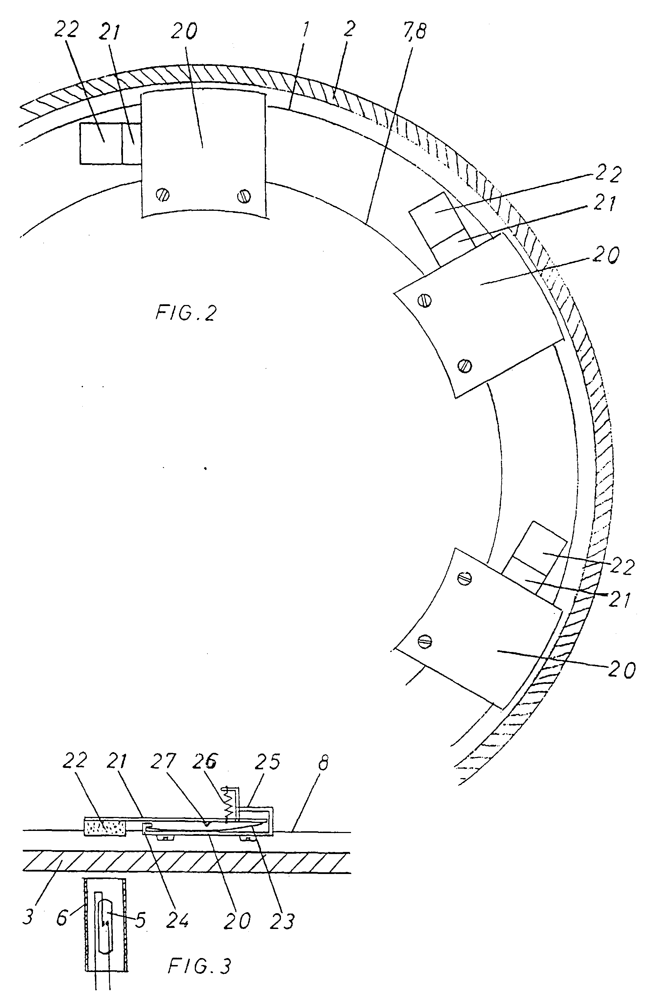

Fig. 2. Ein anderes Ausführungsbeispiel des Erfindungsgegenstandes zeigt schematisch von unten gesehen einen Teil des Übertopfes 2 im Schnitt sowie des Kochgeschirrs 1 mit dem Sandwichboden 7,8, an dem sechs Wärmeleitplatten 20 aus Kupfer (abgebildet sind nur drei) festgeschraubt sind. Auf jeder Wärmeleitplatte 20 liegt eine Bimetallschnappscheibe (23 in Fig.3), die den gelenkig an der Wärmeleitplatte 20 angebrachten Kipphebel 21 betätigt. Jeder Kipphebel 21 trägt an seinem langen Ende einen Permanentmagneten 22. Diese Teile bilden je einen Festthermostaten.

Fig. 3 zeigt einen solchen Festthermostaten von der Seite. Auf der mit dem Kochgeschirrboden 8 verschraubten Wärmeleitplatte 20 liegt die Bimetallschnappscheibe 23, die von der an der Wärmeleitplatte 20 angeformten Nase 24 niedergehalten wird. Der Kipphebel 21 mit dem Permanentmagneten 22 ist an dem der Wärmeleitplatte 20 angeformten Galgen 25 gelenkig gelagert. Die Feder 26 gleicht das Gewicht des Kipphebels 21 mit dem Magneten 22 weitgehend aus. Der Festthermostat ist im kalten Zustand des Kochgeschirrbodens 8 gezeichnet. Der Permanentmagnet 22 befindet sich in seiner unteren Position und hat den unter der Kochfläche 3 in dem ferromagnetischen Rohr 6 angeordneten Reedkontakt 5 eingeschaltet. Die Bimetallschnappscheibe 23 ist nach oben gekrümmt, hat von unten das kurze Ende des Kipphebels nach oben bewegt, so den Permanentmagneten 22 nach unten befördert und damit die Induktionsleistung eingeschaltet. Nun erwärmen sich Kochgeschirrboden 8, Wärmeleitplatte 20 und Bimetallscheibe 23 so lange, bis diese in die nach unten gekrümmte Form umspringt. Sie gibt damit das kurze Ende des Kipphebels 21 frei und drückt über die Ausprägung 27 im Kipphebel 21 das lange Ende des Kipphebels 21 mit dem Magneten 22 nach oben, sodass der Reedkontakt die Induktionsleistung abschaltet. Beim anschliessenden Abkühlen des Kochgeschirrbodens 8 schnappt die Bimetallscheibe 23 wieder zurück, das Spiel wiederholt sich.

In den sechs Festthermostaten liegen sechs Bimetallschnappscheiben 23 von gleicher Gestalt, die vom Bimetallhersteller für die gewünschten Temperaturen (z.B. Wärmen, Garen, Köcheln, Kochen, Braten, Rösten) unterschiedlich kalibriert sind. Eine Justage der einzelnen Festthermostate ist daher nicht erforderlich. Die Konstruktion ist so aufgebaut, dass die Bimetallscheibe 23 im Moment des Schnappens unbelastet frei liegt. Sie darf ferromagnetisch sein, weil sie ausserhalb des Induktionfeldes liegt und daher von diesem praktisch nicht aufgeheizt wird.

## Patentansprüche

1. Kochsystem, bestehend aus einem Kochfeld und einem durch die Kochfläche (3) hindurch fremdbeheizten temperaturgeregelten Kochgeschirr (1), wobei unter der Kochfläche (3) ein magnetisch betätigbarer Sensor (5), insbesondere ein Reedkontakt, und seitlich am Kochgeschirr (1) ein Permanentmagnet (12) angeordnet ist, dadurch gekennzeichnet, dass der Permanentmagnet (12) von einem Thermobimetall (10), vorzugsweise mit Schnappeffekt, bewegt wird, das im Wärmekonfakt zum Kochgeschirrboden (8) steht, und dass in der Nähe, des bewegten Permanentmagneten (12) zusätzlich ferromagnetische Teile fest angebracht sind, welche den Permanentmagneten (12) im Schaltpunkt springen lassen,

2. Kochsystem nach Anspruch 1, bei dem das Kochgeschirr (1) durch Induktion (4) beheizt wird und einen für das Induktionsfeld durchlässigen wärmeisolierenden Übertopf (2) aufweist, dadurch gekennzeichnet, dass zwischen Kochgeschirrboden (8) und Boden des Übertopfs (2) ein Spalt (9) besteht, in dem das im Wärmekontakt zum Kochgeschirrboden (8) stehende Bimetall (10) angeordnet ist, und dass das Bimetall (10) aus nicht ferromagnetischem Material besteht.

3. Kochsystem nach Anspruch 2, dadurch gekennzeichnet dass das Bimetall (10) an einem Ende mit dem Kochgeschirrboden (8) verbunden ist und mit seinem anderen Ende auf das kurze Ende eines Gelenkhebels (11) mit hoher Übersetzung einwirkt, dessen Gelenk zur stufenlosen Temperatureinstellung höhenverstellbar ist, und an dessen langem Ende der Permanentmagnet (12) befestigt ist.

4. Kochsystem nach Anspruch 1, bei dem das Kochgeschirr (1) durch Induktion (4) beheizt wird und einen für das Induktionsfeld durchlässigen wärmeisolierenden Übertopf (2) aufweist, dadurch gekennzeichnet dass zwischen Kochgeschirrboden (8) und Boden des Übertopfs (2) ein Spalt (9) besteht in dem eine Warmeleitplatte (20), vorzugsweise aus Kupfer, am Kochgeschirrboden (8) angebracht ist die seitlich über den Kochgeschirrboden (8) hinausragt, im Wärmekontakt zu dem Thermobimetall (23) steht und den Permanentmagneten (22) bzw. die Reglermechanik (21) mit Permanentmagnet (22) trägt.

5. Kochsystem nach Anspruch 4 , dadurch gekennzeichnet dass mehrere solche Thermostate nebeneinander um den Kochgeschirrboden (7,8) herum angeordnet sind, wobei jeder auf eine andere feste Temperatur voreingestellt ist, und dass aussen am Übertopf (2) Kennzeichen für die Positionen der verschiedenen Festthermostate angebracht sind, sodass die Solltemperatur durch einfaches Drehen des Kochgeschirrs (1) mit Übertopf (2) auf dem Kochfeld eingestellt werden kann.

6. Kochsystem nach Anspruch 5 , dadurch gekennzeichnet, dass der Magnetfeldsensor (5) in einem senkrecht unter der Kochfläche (3) angeordneten, nach oben offenen Rohr (6) aus ferromagnetischem Material untergebracht ist.

7. Kochsystem nach Anspruch 6, dadurch gekennzeichnet, dass das Gewicht des Permanentmagneten (22) durch ein Gegengewicht oder eine Feder (26) ausgeglichen ist.

8. Kochsystem nach Anspruch 7, gekennzeichnet durch wärmeisolierende, hochtemperaturfeste Einlagen zwischen Kochgeschirr (1) und Übertopf (2).

9. Kochsystem nach Anspruch 7, gekennzeichnet durch eine ringförmige elastische Dichtung (16) am oberen Rand zwischen Kochgeschirr (1) und Übertopf (2).

10. Kochsystem nach Anspruch 9, dadurch gekennzeichnet, dass der Raum zwischen Kochgeschirr (1) und Übertopf (2) evakuiert und der Übertopfboden durch Distanzhalter gegen den Kochgeschirrboden (8) abgestützt ist.

## Claims

1. Cooking system, consisting of a cooking platform and a cooking pot (1), externally heated through the cooking surface (3) and temperature controlled, with a magnetically operated sensor (5) under the cooking surface (3), in particular a reed contact, and a permanent magnet (12) arranged at the side of the cooking pot (1), characterised in that the permanent magnet (12) is moved by a bimetallic thermostat (10), preferably with a snap effect, which is in thermal contact with the bottom of the cooking pot (8) and that in the vicinity of the moved permanent magnet (12) there are additional ferromagnetic parts permanently fitted which cause the permanent magnet (12) to jump at the switching point.

2. Cooking system according to Claim 1, with which the cooking pot (1) is heated by induction (4) and has a covering pot (2), permeable to the induction field and thermally insulating, characterised by a gap (9) between the bottom (8) of the cooking pot and the bottom of the covering pot (2) with the bimetallic thermostat (10) arranged to be in thermal contact with the bottom (8) of the cooking pot and with the bimetallic thermostat (10) not consisting of ferromagnetic material.

3. Cooking system according to Claim 2, characterised by the bimetallic thermostat (10), joined at one end to the bottom (8) of the cooking pot and with its other end on the short end of an articulated lever (11) operating with a high leverage ratio and the joint of which is adjustable in height for continuous temperature adjustment and at the long end of which the permanent magnet (12) is attached.

4. Cooking system according to Claim 1, with which the cooking pot (1) is heated by induction (4). and which features a thermally insulating covering pot (2), permeable to the induction field, characterised in that between the bottom (8) of the cooking pot and the bottom of the covering pot (2) there is a gap (9) in which a thermally conducting plate (20), preferably of copper, is fitted to the bottom (8) of the cooking pot and which protrudes at the side over the bottom (8) of the cooking pot, is in thermal contact with the bimetallic thermostat (23) and carries the permanent magnet (22), resp. the regulating mechanism (21) with permanent magnet (22).

5. Cooking system according to Claim 4, characterised in that many such thermostats are arranged next to one another around the bottom of the cooking pot (7, 8), with each being pre-set to a different fixed temperature and that on the outside of the covering pot (2) markings for the positions of the various fixed thermostats are applied, so that the set temperature can be adjusted by simply rotating the cooking pot (1 ) with the covering pot (2) on the cooking platform.

6. Cooking system according to Claim 5, characterised in that the magnetic field sensor (5) is accommodated in a tube (6), open at the top and consisting of ferromagnetic material, and which is arranged vertically below the cooking surface (3).

7. Cooking system according to Claim 6, characterised in that the weight of the permanent magnet (22) is compensated by a counterweight or a spring (26).

8. Cooking system according to Claim 7, characterised by thermally insulating, high-temperature resistant inserts between the cooking pot (1) and covering pot (2).

9. Cooking system according to Claim 7, characterised by a ring-shaped, elastic seal (16) on the upper edge between the cooking pot (1) and covering pot (2).

10. Cooking system according to Claim 9, characterised such that the space between the cooking pot (1) and covering pot (2) is evacuated and the covering pot bottom is supported against the bottom (8) of the cooking pot by distance pieces.

## Revendications

1. Système de cuisson, composé d'une table de cuisson et d'un récipient de cuisson (1) régulé en température chauffé par l'extérieur au travers de la plaque de cuisson (3), un capteur à commande magnétique (5), particulièrement un contact Reed, étant disposé sous la plaque -de cuisson (3) et un aimant permanent (12) étant disposé sur le côté du récipient de cuisson (1), caractérisé par le fait que l'aimant permanent (12) est déplacé par une bilame thermique (10), de préférence avec effet de cliquet, qui se trouve en contact thermique avec le fond du récipient de cuisson (8), et que des pièces ferromagnétiques supplémentaires qui libèrent l'aimant permanent (12) au point de commutation sont installées à demeure à proximité d'aimant permanent (12) mobiles.

2. Système de cuisson selon la revendication 1, avec lequel le récipient de cuisson (1) est chauffé par induction (4) et présente un couvre-pot (2) à isolation thermique et perméable au champ d'induction, caractérisé par le fait qu'entre le fond du récipient de cuisson (8) et le fond du couvre-pot (2) se trouve un espace (9) dans lequel est logée la bilame (10) en contact thermique avec le fond du récipient de cuisson (8), et que la bilame se compose de matériau non ferromagnétique.

3. Système de cuisson selon la revendication 2, caractérisé par le fait que l'une des extrémités de la bilame (10) est reliée au fond du récipient de cuisson (8) et que l'autre de ses extrémités agit sur l'extrémité courte d'un levier articulé (11) à haute démultiplication dont l'articulation est réglable en hauteur pour permettre un réglage graduel de la température et à l'extrémité longue duquel est fixé un aimant permanent (12).

4. Système de cuisson selon la revendication 1, avec lequel le récipient de cuisson (1) est chauffé par induction (4) et présente un couvre-pot (2) à isolation thermique et perméable au champ d'induction, caractérisé par le fait qu'entre le fond du récipient de cuisson (8) et le fond du couvre-pot (2) se trouve un espace (9) dans lequel une plaque conductrice thermique (20), de préférence en cuivre,. est fixée sur le fond du récipient de cuisson (8), laquelle dépasse latéralement au-dessus du fond du récipient de cuisson (8), se trouve en contact thermique avec la bilame thermique (23) et comporte l'aimant permanent (22) ou le mécanisme de régulation (21) avec l'aimant permanent (22).

5. Système de cuisson selon la revendication 4, caractérisé par le fait que plusieurs thermostats de ce type sont disposés les uns à côté des autres autour du fond du récipient de cuisson (7, 8), chacun étant préréglé sur une autre température donnée, et que des repères indiquant la position des différents thermostats fixes sont apposés à l'extérieur sur le couvre-pot (2) de manière à pouvoir régler la température voulu tout simplement en tournant le récipient de cuisson (1) avec son couvre-pot (2) sur la table de cuisson.

6. Système de cuisson selon la revendication 5, caractérisé par le fait que le capteur à champ magnétique (5) est logé dans un tube (6) en matériau ferromagnétique ouvert en haut et disposé perpendiculairement sous la plaque de cuisson (3).

7. Système de cuisson selon la revendication 6, caractérisé par le fait que le poids d'aimant permanent (22) est compensé par un contrepoids ou un ressort (26).

8. Système de cuisson selon la revendication 7, caractérisé par des garnitures d'isolation thermique et résistantes aux températures élevées entre le récipient de cuisson (1) et le couvre-pot (2).

9. Système de cuisson selon la revendication 7, caractérisé par un joint (16) élastique annulaire sur le bord supérieur entre le récipient de cuisson (1) et le couvre-pot (2).

10. Système de cuisson selon la revendication 9, caractérisé par le fait que l'espace entre le récipient de cuisson (1) et le couvre-pot (2) est sous vide et que le fond du couvre-pot est soutenu par des écarteurs sur le fond du récipient de cuisson (8).
